# EUROPÄISCHE PATENTANMELDUNG

(11) **EP 1 123 783 A2**
(43) Veröffentlichungstag der Anmeldung: **16.08.2001**
(21) Anmeldenummer: 00106300.7
(22) Anmeldetag: 23.03.2000
(51) Int. Cl.: B25J 15/00, F16B 7/04

(54) **Drehlager zur Anbringung von Werkzeugen an Traggestellen**

(30) Priorität: 10.02.2000 US 501878
(71) Anmelder: DE-STA-CO Metallerzeugnisse GmbH, D-61449 Steinbach/Ts. (DE)
(72) Erfinder: Silvas, David, Wylie, Texas 75098 (US); Beall, Daniel, Allen, Texas 75002 (US); Schulze, Richard, Plano, Texas 75025 (US)
(74) Vertreter: Wolf, Günter, Dipl.-Ing.

(57) **Zusammenfassung**

Die Erfindung betrifft ein Drehlager an aus Profilstangen (1) gebildeten und insbesondere an Roboterarmen befestigten und von diesen bewegbaren Traggestellen (TG) für die Anbringung von Werkzeugen, wie Spann-, Saug-, Greifvorrichtungen und/oder sonstigen Arbeitshilfsmitteln.
Nach der Erfindung ist ein solches Drehlager gebildet aus einer mindesten außen zylindrische Hülse (3), die an ihrer Innenumfangsfläche (4) mit zwei diametral gegenüber angeordneten Kerbnuten (5) versehen ist, und durch mindestens zwei diametral gegenüber an der Außenumfangsfläche der Profilstange (1) angeordnete Kerbnuten (6), die fluchtend zu den Kerbnuten (5) der Hülse (3) ausgerichtet sind, wobei in den Kerbnutenpaaren (5,6) zylindrische, an den Flächen (5',6') der Kerbnuten (5,6) anliegende Stifte (7) angeordnet sind.

## Beschreibung

Die vorliegende Erfindung bezieht sich auf ein Drehlager an aus Profilstangen gebildeten, insbesondere an Roboterarmen befestigten und von diesen bewegbaren Traggestellen für die Anbringung von Werkzeugen, wie Spann-,Saug-,Greifvorrichtungen und/oder sonstigen Arbeitshilfsmitteln.

Derartige Profilstangen werden für die Zusammenstellung von Traggestellen verwendet, die ihrerseits insbesondere zur Anbringung an Roboterarmen und für die Anbindung von Werkzeugen, wie Spann-, Saug-, Greifvorrichtungen und/oder sonstigen Arbeitshilfsmitteln bestimmt sind.
Bei den dafür vorgesehenen Profilstangen, die untereinander durch entsprechend profilangepaßte Klemmstücke verbunden werden, handelt es sich in der Regel um Achteckprofile, die wiederum in der Regel mit mindestens zwei sich radial gegenüberstehenden Nuten versehen sind. Achteckprofilstangen werden deshalb für den genannten Zweck bevorzugt verwendet, um die profilangepaßten Klemmstücke in acht unterschiedlichen radialen Orientierungen an den Profilstangen ansetzen zu können, und zwar jenachdem mit welcher Orientierung die bspw. oben genannten Werkzeuge am Traggestell sitzen oder welche Orientierung kreuzende, vom gleichen Klemmstück gehaltene Profilstangen haben sollen. Eine unmittelbare stufenlose Orientierungseinstellung solcher Werkzeuge in Bezug auf solche vieleckigen Profilstangen via Klemmstück ist also nicht möglich und bedurfte bislang einer besonderen Ausbildung der Klemmstücke bspw. dahingehend, daß diese in aufwendiger Weise mit einem Drehscheibenpaar kombiniert werden mußten, wenn eine stufenlose Verdrehung gewünscht wurde.
Bezgl. an Profilstangen anlegbarer Klemmstücke wird auf das US-A-4,032,245 verwiesen.
Nach der GB-A-2 275 737 A sind aber auch Traggestelle dieser Art bekannt, bei denen die Tragstangen aus zylindrischen Profilrohren bestehen. Da es sich bei den Profilstangen, egal ob zylindrisch oder vieleckig, um gezogenes Material handelt, treten hierbei unvermeidbar Ungenauigkeiten auf, die sich nachteilig für die exakte Einstellung angebundener Werkzeuge der oben genannten Art bemerkbar machen können.
Außerdem ist ein verdrehfester Sitz in allen radialen Orientierungen allein durch Verklemmen nicht gewährleistet.

Die Aufgabe der vorliegenden Erfindung besteht also darin, ein Drehlager an solchen Profilstangen zu schaffen, das auf einfache Weise und mit einfachen Mitteln in Bezug auf die Längsachse der Profilstangen exakt zentrierbar ist.

Diese Aufgabe ist durch ein Drehlager gemäß unabhängigen Patentanspruch 1 gelöst. Vorteilhafte Weiterbildungen ergeben sich nach den abhängigen Patentansprüchen 2 bis 8.

Unter "Drehlager" ist im vorliegenden Zusammenhang selbstverständlich nicht ein Element zu verstehen, um das ständig ein anderes Element drehen soll, sondern gewissermaßen eine inneres, stationäres Lager für ein darauf anzuordnendes Element, das auf diesem "Drehlager" in beliebiger Radialstellung fixiert werden kann.

Mit der mindestens außen zylindrischen Hülse wird also an der gewünschten Anordnungsstelle ein verdrehfestes Drehlager der jeweiligen Profilstange zugeordnet, auf dem dann unmittelbar ein entsprechend innenzylindrischer Adapter aufgeschoben wird, der stufenlos in jeder gewünschten radialen Orientierung an der Hülse bzw. dem Drehlager nach der vorliegenden Erfindung fixiert werden kann, was noch näher erläutert wird.

An einem solchen Adapter ist dann das an dieser Stelle gewünschte Werkzeug in geeigneter Weise befestigt.
Da bei derartigen, von Roboterarmen getragenen und in allen möglichen Richtungen bewegbaren Traggestellen höchstmögliche Positionierungsgenauigkeiten für die daran angeordneten Werkzeuge gefordert sind, muß auch die Hülse genau zur Längsachse der Profilstange zentriert sein, welcher Zentrierungsforderung die erfindungsgemäßen Kerbnuten mit den zylindrischen Stiften auf sehr einfache Weise genügen. Diese Stifte stellen dabei nicht nur eine Verdrehsicherung für die Hülse dar, sondern mit diesen beiden Stiften ist auch insbesondere für eine exakte Zentrierung der Hülse zur Achse der Profilstange gesorgt.

Da ferner derartige Profilstangen für den genannten Zweck der Erstellung von robotergetragenen und bewegten Trageinrichtungen, wie vorerwähnt, in der Regel und insbesondere bei vieleckigen Querschnitten auch mit mindestens zwei Nuten versehen sind, besteht nach der vorliegenden Erfindung eine vorteilhafte Ausgestaltung am Drehlager darin, daß die Hülse mit zwei radial nach innen weisenden, sich radial gegenüberstehenden und in Nuten der Profilstange passenden und eingreifenden Stegen versehen ist, wobei die Nuten und die Stege versetzt zu den Kerbnutenpaaren angeordnet sind. Bei dieser Ausführungsform nehmen also insbesondere und vorteilhaft die Stege der Hülse an der Verdrehsicherung teil.

Das erfindungsgemäße Drehlager und dessen vorteilhaften Weiterbildungen und Ausführungsformen werden nachfolgend anhand der zeichnerischen Darstellung von Ausführungsbeispielen näher erläutert.

Es zeigt
- Fig.1: einen Schnitt durch eine achteckige Profilstange mit vier Nuten;
- Fig.2: einen Schnitt durch eine achteckige Profilstange mit zwei Nuten;
- Fig.3: einen Schnitt durch eine Profilstange mit dem auf ihr zentriert angeordneten Drehlager;
- Fig.4: einen entsprechenden Schnitt gemäß Fig.3 in anderer Ausführungsform;
- Fig.5: in perspektivischer Darstellung eine Profilstange mit dem erfindungsgemäßen Drehlager und einem darauf befestigtem Adapter;
- Fig.6: im Schnitt eine weitere Ausführungsform des Drehlalagers in Verbindung mit einer Profilstange gemäß Fig.2;
- Fig.7: im Schnitt das Drehlager in Verbindung mit einem im Querschnitt kreisförmigen Rohr als Profilstange;
- Fig.8: stark vergrößert einen Schnitt durch den Anordnungsbereich eines Kerbnutenpaares;
- Fig.9: einen Schnitt durch das Drehlager längs Linie IX-IX in Fig.5 und
- Fig. 10: in perspektivischer Darstellung ein Ausführungsbeispiel eines Traggestelles für die Erfassung und den Transport eines Karosseriebleches.

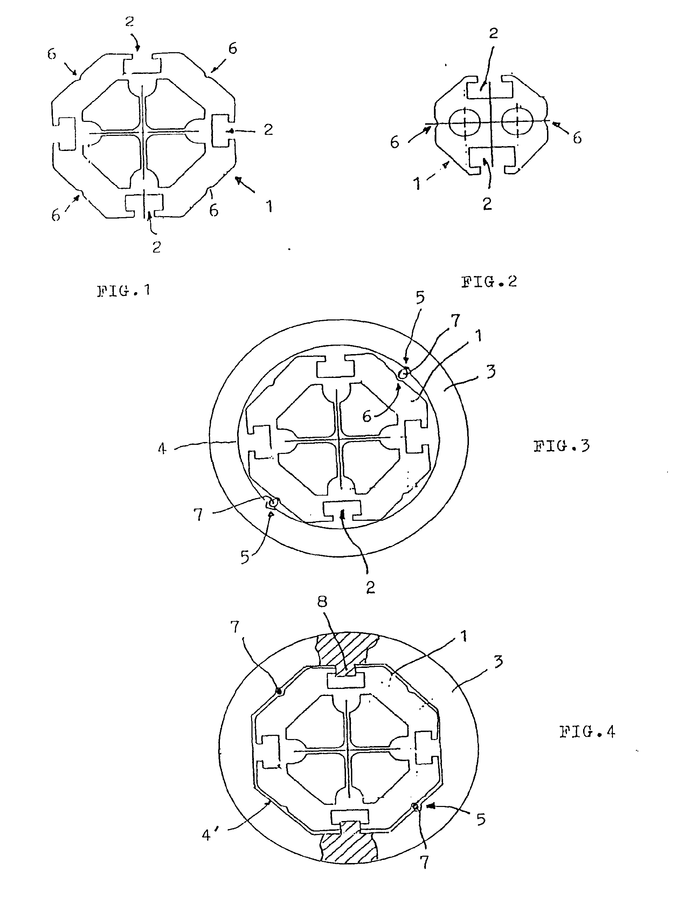

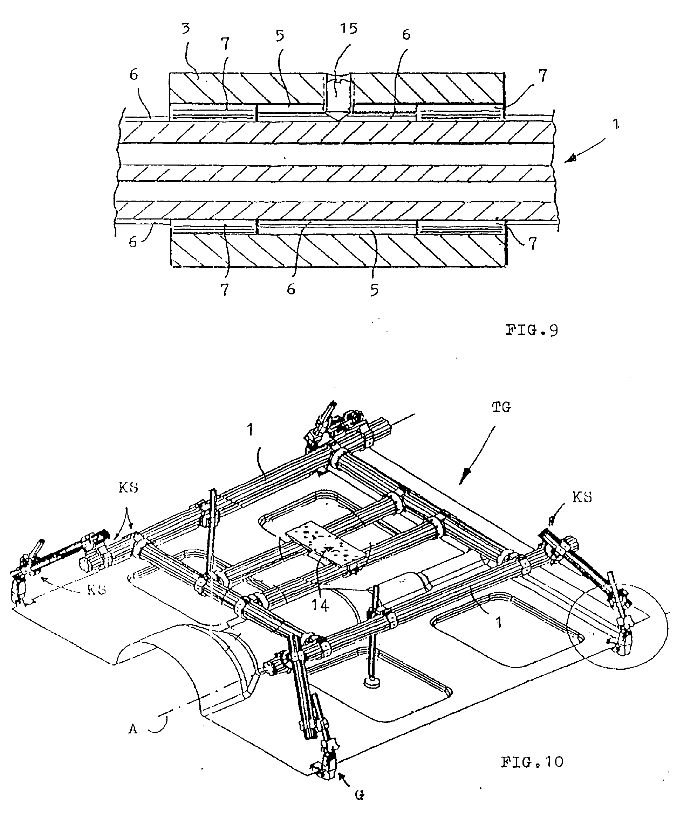

In den Fig.1,2 sind typische, achteckige Profilstangen 1 im Schnitt dargestellt, wie sie für die Zusammenstellung von an Roboterarmen angeordneten Traggestellen Verwendung finden. Ein solches Traggestell ist nur als Beispiel in Fig.10 verdeutlicht, wobei die Profilstangen 1 untereinander durch sogenannte Klemmstücke KS verbunden sind, die keiner besonderen Erläuterung bedürfen, da bekannt und hier nicht von unmittelbarem Interesse. Hingewiesen sei nur darauf, daß es sich bei den in Fig.10 dargestellten Stangenverbindern um die in der Einleitung vorerwähnten Klemmstück-Drehscheiben-Kombinationen handelt, mit denen die dargestellten Greifer G nicht unmittelbar zu den Achsen A der Profilstangen 1 stufenlos drehbar eingestellt werden können.

Bei den in den Fig.1,2 im Schnitt dargestellten Profilstangen 1 handelt es sich um im Querschnitt achteckige Profile, die sich im wesentlich lediglich durch ihre Querschnittsgröße und die Anzahl ihrer Nuten 2 unterscheiden. Mit Rücksicht auf die Gesamtstabilität bzw. Steifigkeit solcher aus den Profilstangen zusammengestellter Tragegestelle haben die Profilstangen relativ dicke Wandstärken, d.h., wie sie in Bezug auf den jeweiligen Durchmesser bspw. dargestellt sind.

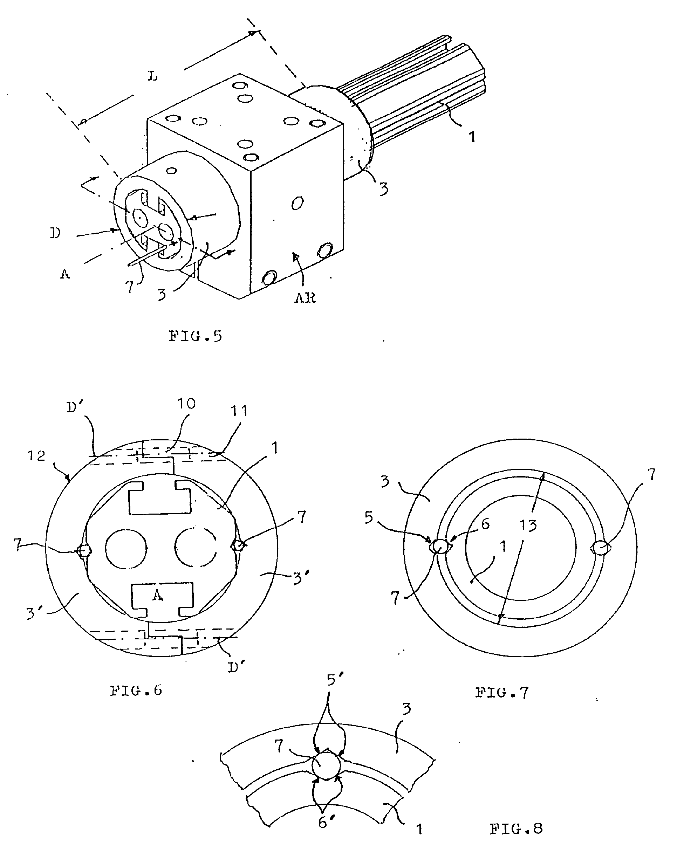

Für das Drehlager nach der vorliegenden Erfindung, das an solchen Profilstangen 1 ausgebildet werden soll, ist unter Verweis auf Fig.3 wesentlich eine mindesten außen zylindrische Hülse 3, die an ihrer Innenumfangsfläche 4 mit zwei diametral gegenüber angeordneten Kerbnuten 5 versehen ist, wobei mindestens zwei diametral gegenüber an der Außenumfangsfläche der jeweiligen Profilstange 1 angeordnete, entsprechende Kerbnuten 6 vorgesehen sind, die fluchtend zu den Kerbnuten 5 der Hülse 3 ausgerichtet sind. In den so gebildeten Kerbutenpaaren 5,6 sind dabei erfindungsgemäß zylindrische, an den Flächen 5',6' der Kerbnuten 5,6 anliegende Stifte 7 angeordnet.
Bzgl. der Zuordnung der Stifte 7 zu den Kerbnuten 5,6 wird auf die stark vergrößerte Darstellung in Fig.8 verwiesen. Die Stifte 7 dienen in Verindung mit den im Querschitt dreieckigen Kerbnuten 5,6 sowohl zur exakten Zentrierung der Hülse 3 zur Achse A der Profilstange 1 als auch gleichzeitig zur Verdrehsicherung der Hülse 3 gegenüber der Profilstange 1.

Da, wie vorerwähnt, für die vorliegenden Zweck, insbesondere Profilstangen gemäß der Fig.1,2 verwendet werden, die also mit Nuten 3 versehen sind, besteht eine vorteilhafte Weiterbildung gemäß Fig.4 darin, daß die das erfindungsgemäße Drehlager bildende Hülse 3 mit zwei radial nach innen weisenden, sich radial gegenüberstehenden und in Nuten 2 der Profilstange 1 passenden Stegen 8 versehen ist, wobei die Nuten 2 und die Stege 8 versetzt zu den Kerbnutenpaaren 5,6 angeordnet sind.
Die Verdrehsicherung wird hierbei also insbesondere von den in die Nuten 2 eingreifenden Stegen 8 übernommen, d.h., die Kerbnuten und die Päßstifte 7 können in diesem Falle kleiner dimensioniert werden, wie beim Ausführungsbeispiel nach Fig.3.

Das Ausführungsbeispiel gemäß Fig.4 dient auch zur Darstellung einer Ausführungsform, bei der die erfindungsgemäße Hülse 3 mit ihrer Innenfläche 4' im wesentlichen der vieleckigen Querschnittsform der Profilstange 1 angepaßt ist.

In Fig.5 ist die Anordnung des erfindungsgemäßen Drehlagers bzw. der Hülse 3 auf einer Profilstange 1 perspektivisch verdeutlicht, wobei auch ein auf der Hülse 3 aufgeklemmt fixierter Adapter AR mit dargestellt ist, an dem dann ein Werkzeug befestigt werden kann. Ein solcher Adapter AR kann also in jeder beliebigen radialen Stellung an der Hülse 3 fixiert werden. Die Länge L der Hülse 3 entspricht dabei vorteilhaft mindestens der doppelten Größe ihres Durchmessers, um einen solchen Adapter AR auch in axialer Richtung unterschiedlich positionieren zu können.

In Fig.6 ist eine insoweit besondere Ausführungsform der Hülse 3 dargestellt, als diese aus zwei identischen Schalenhälften 3' gebildet ist, die, wie dargestellt, an ihren Stoßstellen verschränkt oder geschäftet sein können und auch dort im Bereich konjugierter Durchmesser D' miteinander mittels nur gestrichelt dargestellter Schrauben 10 verschraubt sind. Die Köpfe der Schrauben 10 müssen dabei selbstverständlich in den Schraubenbohrungen 11 mit untergebracht sein, d.h., diese dürfen die Außenumfangsfläche 12 der Hülse 3 nicht überragen.

In Fig.7 ist schließlich noch eine Ausführungsform der Erfindung verdeutlicht, bei der es sich um eine zylindrisches Rohr als Profilstange 1 handelt, der die Hülse 3 trotz ihres inneren Übermaßes 13 genau zentrisch zuzuordnen ist, was auch bei dieser Ausführungsform durch das Eintreiben bzw. Einschieben der beiden zylindrischen Stifte 7 in die auch hierbei vorhandenen Kernutenpaare 5,6 bewirkt wird. Das hier angesprochene Übermaß 13, das durchaus in der Größenordnung 1 bis 2 mm betragen kann, ist natürlich auch bei den anderen Ausführungsbeispielen zwischen Profilstange 1 und Hülse 3 vorhanden.

In Fig.9 ist ein Schnitt längs Linie IX-IX in Fig.5 durch das Drehlager dargestellt. Hieraus ergibt sich, daß die Kerbnuten 5,6 sowohl an der Hülse 3 als auch an der Profilstange 1 über deren ganze Länge erstreckt sind. Um die Stifte 7 nicht mit einer der Länge L der Hülse 3 entsprechenden Länge in die Kernutenpaare mit leichtem Preßsitz einschlagen zu müssen, sind die Stifte 7 in Bezug auf die Länge der Kerbnuten 5 in der Hülse 3 kürzer bemessen und von beiden Seiten in die Kerbnutenpaare eingeschoben. Außerdem kann, wie ebenfalls aus Fig.9 ersichtlich, für eine zusätzliche axiale Festlegung der Hülse 3 an der Profilstange 1 durch eine Senkschraube 15 gesorgt werden.

Beim in Fig.10 dargestellten Ausführungsbeispiel handelt es sich, wie einleitend erwähnt, um zu einem Traggestell TG mittels Klemmstücken KS zusammengefügte Profilstangen 1. Dieses Traggestell TG wird von einem hier nicht dargestellten Roboterarm getragen, an dem es mittels einer zentrisch angeordneten Verbindungsplatte 14 befestigt ist. Da es sich nur um ein Beispiel für ein Traggestell TG bekannter Art handelt, sind an diesem Beispiel keine Drehlager nach der Erfindung dargestellt.

## Patentansprüche

1. Drehlager an aus Profilstangen (1) gebildeten und insbesondere an Roboterarmen befestigten und von diesen bewegbaren Traggestellen (TG) für die Anbringung von Werkzeugen, wie Spann-, Saug-, Greifvorrichtungen und/oder sonstigen Arbeitshilfsmitteln,
**gekennzeichnet durch**
eine mindesten außen zylindrische Hülse (3), die an ihrer Innenumfangsfläche (4) mit zwei diametral gegenüber angeordneten Kerbnuten (5) versehen ist, und durch mindestens zwei diametral gegenüber an der Außenumfangsfläche der Profilstange (1) angeordnete Kerbnuten (6), die fluchtend zu den Kerbnuten (5) der Hülse (3) ausgerichtet sind, wobei in den Kerbnutenpaaren (5,6) zylindrische, an den Flächen (5',6') der Kerbnuten (5,6) anliegende Stifte (7) angeordnet sind.

2. Drehlager nach Anspruch 1,
**dadurch gekennzeichnet,**
daß die Kerbnuten (5,6) über die ganze Länge sowohl der Hülse (3) als auch der Profilstange (1) erstreckt sind.

3. Drehlager nach Anspruch 1 oder 2
**dadurch gekennzeichnet,**
daß die in Bezug auf die Länge der Kerbnuten (5,6) kürzer bemessenen Stifte (7) von beiden Seiten in die Kerbnuten (5,6) eingeschoben sind.

4. Drehlager nach einem der Ansprüche 1 bis 3,
**dadurch gekennzeichnet,**
daß die Hülse (3) mit mindestens einer Senkschraube (15) gegen axialen Verschub an der Profilstange (1) festgelegt ist.

5. Drehlager nach einem der Ansprüche 1 bis 4,
**dadurch gekennzeichnet,**
däß die Innenfläche (4') der Hülse (3), im Querschnitt gesehen, im wesentlichen dem Querschnitt der Profilstange (1) entspricht.

6. Drehlager nach einem der Ansprüche 1 bis 5,
**dadurch gekennzeichnet,**
daß die Hülse (3) aus zwei Halbschalen (3') gebildet ist und daß die Halbschalen (3') im Bereich ihrer Wand auf zur Achse (A) der Profilstange gleichabständigen, konjugierten Durchmessern (D') miteinander verschraubt sind.

7. Drehlager nach einem der Ansprüche 1 bis 6,
**dadurch gekennzeichnet,**
daß die Hülse (3) mit zwei radial nach innen weisenden, sich radial gegenüberstehenden und in Nuten (2) der Profilstange (1) passenden Stegen (8) versehen ist, die Nuten (2) und die Stege (8) sind versetzt zu den Kerbnutenpaaren (5,6) angeordnet.

8. Drehlager nach einem der Ansprüche 1 bis 7,
**dadurch gekennzeichnet,**
daß die Hülse (3) mit einer Länge (L) bemessen ist, die mindestens dem doppelten Außendurchmesser (D) der Hülse (3) entspricht.
